## Europäisches Patentamt

(19) **European Patent Office**

**Office européen des brevets**

(11) Publication number: **0 122 658**
**B1**

(12) ## EUROPEAN PATENT SPECIFICATION

(45) Date of publication of patent specification: **15.10.86**

(51) Int. Cl.⁴: **C 22 B 7/00**

(21) Application number: **84200464.0**

(22) Date of filing: **02.04.84**

(54) **Method for the separate recovery of metals from waste in particular chemical waste.**

(30) Priority: **05.04.83 NL 8301185**

(43) Date of publication of application:
**24.10.84 Bulletin 84/43**

(45) Publication of the grant of the patent:
**15.10.86 Bulletin 86/42**

(84) Designated Contracting States:
**BE CH DE FR GB LI LU NL**

(56) References cited:
**FR-A-2 351 177**
**FR-A-2 436 821**
**US-A-3 966 569**
**US-A-4 151 257**
**US-A-4 162 294**

**ANNALES DES MINES, no. 2, February 1970,
page 68, G.E.D.I.M., 42029, Saint-Etienne, FR.,
P.T. BROOKS et al.: "Chemical reclaiming of
superalloy scrap"**

(73) Proprietor: **ESMIL B.V.**
**De Boelelaan 7 P.O. Box 7811**
**NL-1008 AA Amsterdam (NL)**

(72) Inventor: **Bolt, Arend**
**Roelantlaan 309**
**Geldrop (NL)**
Inventor: **Kamphuis, Bernhard A.**
**Hertog Hendriklaan 14**
**Baarn (NL)**
Inventor: **van Gemert, Wilhelmus J. Th., Dr. ir.**
**Olieslagershorst 232**
**Apeldoorn (NL)**
Inventor: **Tels, Martinus, Prof. ir.**
**Twickel 13**
**Eindhoven (NL)**

(74) Representative: **Wentzel, Hendrik Cornelis et al**
**Hoogovens Groep B.V. P.O. Box 10.000**
**NL-1970 CA IJmuiden (NL)**

Courier Press, Leamington Spa, England.

## Description

The invention relates to a method for the separate recovery of metals such as chromium, zinc, cadmium, nickel from iron-containing waste, especially chemical waste, in which the waste is treated with an acid, whereby an aqueous solution (1) and a residue are obtained.

In this connection, by chemical waste is understood waste materials which are recognized as chemical waste by the laws of any country and for which there are restrictions concerning the disposal of such waste. The invention relates in particular to the disposal of this chemical waste. The invention is not limited to this however. The invention can be also in general applied to the processing of waste (or waste materials), for instance a waste product or by-product of a process, which is not waste within the meaning of the law but which is a metal-containing mixture which in any case contains iron, and from which the separate recovery of metals is rational. In particular the invention relates to waste originating from the electroplating and pickling industries. The method is however also applicable to waste from other origins such as harbour or dock sludge. The method may even be applied to waste in the form of e.g. dust. As a rule the waste undergoes a pre-treatment in which the metals in the waste are concentrated. After the pre-treatment the waste often takes the form of a metal-containing sludge.

It is known, as the first step in the recovery of metals, to treat the chemical waste with acid. The aim here is to obtain an aqueous solution containing the ions of the metal, and a residue which is not chemical waste within the meaning of the law and which can be freely disposed of. The preferred acid is the cheap sulphuric acid. Known methods for the separate recovery of metals are liquid-liquid extraction — called extraction in the following — and ion exchange.

Mostly, the chemical waste contains significant quantities of iron, and although iron is not chemical waste within the meaning of the law it goes partially into solution during the dissolution treatment. The iron which is dissolved interferes with the separate recovery of other metals and must therefore be removed. It is known to remove iron (III) selectively from an aqueous solution by extraction using MIBK (methylisobutyl ketone) as the extraction medium. This extraction has the following difficulties. Firstly the extraction is only possible from a solution containing much hydrochloric acid. The hydrochloric acid must, after the recovery of other metals from the hydrochloric solution, (1) be recovered by distillation or (2) be neutralised whereby expensive hydrochloric acid is lost and much salt is produced for the disposal of which a levy must be paid; both methods carry large extra costs. Secondly, when MIBK is used much of this extraction medium is lost due to its high solubility in the aqueous solution.

If the waste also contains lead, it is necessary to use another acid such as hydrochloric or nitric acid, in place of the sulphuric acid, since the use of sulphuric acid leaves an unacceptable quantity of lead sulphate in the residue as a result of its poor solubility. When hydrochloric acid is chosen there remains the above-mentioned second difficulty, with MIBK, of the loss of this extraction material in the aqueous solution.

A further problem with lead is that, during the recovery of other metals in an anion exchanger, this metal diffuses. The metals recovered in an anion exchanger are therefore heavily contaminated with lead.

The separate recovery of chromium also poses a problem. When an anion exchanger is employed, chromium (III) passes through the exchanger, while during extraction of chromium (VI) zinc and cadmium are co-extracted.

The object of the invention is to provide a solution of the above-mentioned difficulties and hence improve known methods.

This is achieved in the invention by selectively extracting the iron (III) from the solution (1) at a pH of 0—1 using an organophosphoric acid as extraction medium (1), and by recovering other metals separately too. The advantage of this is that in this way iron can be extracted selectively from the aqueous solution with a partition coefficient of about 1000, with not more than a very slight loss of extraction medium.

It is remarked that it is known from DE 2503398 to extract iron and zinc together from an acid sulphate solution with an organophosphoric acid as extraction medium. What is not known is how to use this extraction medium to extract iron (present as $Fe^{3+}$) selectively from an acid solution by controlling the pH accurately to a value betwen 0 and 1, whereby the aqueous medium is not bound to sulphuric acid.

Preferably di-2-ethylhexylphosphoric acid dissolved in a suitable organic solvent is used as extraction medium.

The regeneration of this extraction medium with sulphuric acid, as described in DE 2503398 is not efficient, and hence the iron is preferably back-extracted from the extraction medium using a strong, e.g. 6 M, HCl solution.

A further improvement consists in subjecting the chromium (III) in the solution (2) to oxidation treatment using an oxidising agent such as sodium hypochlorite (NaClO) at a pH of 2—4, in selectively extracting the chromium (VI) so formed from the solution at a pH of 2.5—4 using a suitable extraction medium (III) and in removing co-extracted cadmium and zinc from the charged extraction medium (III) before back-extraction of the chromium (VI) by washing with a wash liquid such as a sodium sulphate solution with a pH of about 3; the advantage of this is that the Cr VI to be recovered is hardly contaminated with cadmium and zinc.

In another aspect the object of the invention is achieved by the combination of the following steps:

a. treatment of the waste with an acid, whereby an aqueous solution (1) and a residue are obtained;

2

b. selective extraction of the iron (III) from solution (1) at a pH of 0—1 using an organophosphoric acid as extraction medium (I);

c—2. oxidative treatment of the chromium (III) in solution (2) at a pH of 2—4 using an oxidising agent, such as sodium hypochlorite (NaClO), and

c—3. selective extraction of the chromium (VI) formed from the solution at a pH of 2.5—4 using a suitable extraction medium (III) and the removal of co-extracted cadmium and zinc from the charged extraction medium (III) by washing it with a wash liquid, such as a sodium sulphate solution at a pH of 3, before back-extraction of the chromium (VI).

A further improvement is achieved by the following step:

e. extraction of zinc, cadmium and nickel together from the solution (4) at a pH of 6—7 using a suitable extraction medium (V). The solution (4), when zinc, cadmium and nickel have been removed, can be disposed of.

The zinc, cadmium and nickel can finally be recovered separately by the three following steps:

f. back-extraction of the extraction medium (V) charged in step e at a pH of less than 5 using an aqueous solution which contains about 5 mol/l of NaCl;

g. fixing zinc and cadmium from solution (6) on a strongly basic anion exchanger followed by successive elution of zinc and cadmium with 0.02 M HCl and water respectively and

h. extraction from solution (7) of the nickel which has passed unhindered through the anion exchanger during the fixing at step g by the use of a suitable extraction medium (VI) at a pH of 6—7.

Particular embodiments of the method of the invention for the case where the chemical waste also contains cobalt, manganese copper or lead are given in sub-claims.

The invention will be illustrated non-restrictively with reference to the drawing.

Fig. 1 shows a process diagram for the separate recovery of metals from chemical waste in accordance with the invention.

Fig. 2 shows in detail the step, indicated in Fig. 1 by a, of selective extraction of iron (III) and shows an embodiment of the extraction process.

Fig. 3 shows in detail the step, indicated in Fig. 1 by c—3, of selective extraction of chromium (VI) and shows an embodiment of the extraction process.

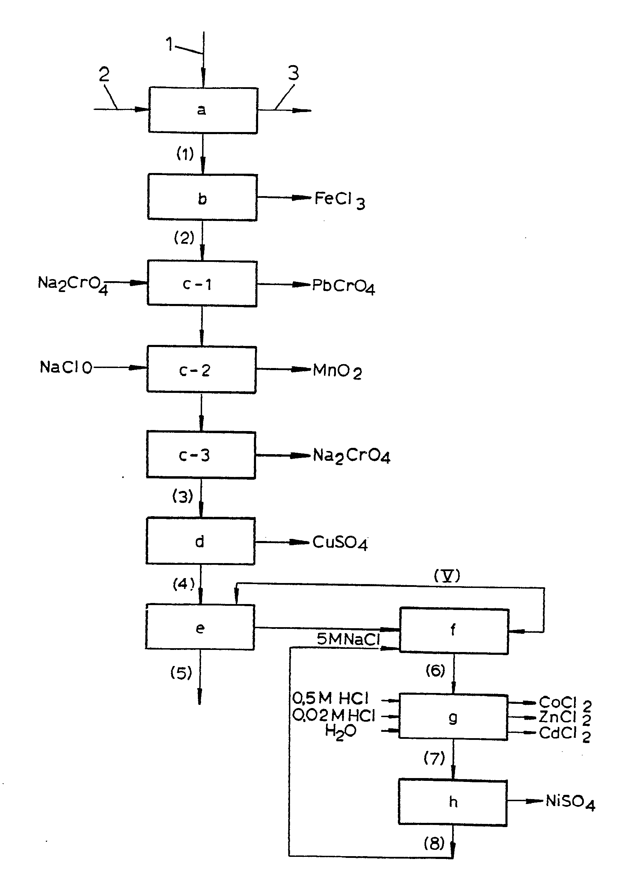

In Fig. 1 reference numeral 1 shows the supply of mixed metal-containing sludges to a solution step a. An acid is introduced by a supply 2.

The sludge is dissolved in an acid suitable for the purpose so that the pH of a solution (1) obtained reaches a final value of between 0 and 1. Sulphuric acid is preferably used since it is cheap and since when sulphuric acid is used calcium for the most part does not go into solution. If however there is much lead present in the sludge so that the residue obtained from the solution step 'a' through the discharge 3 would not conform with the legal standards, use is made of hydrochloric or nitric acid.

Since in the solution step a the metals cited in the Chemical Waste Law (Cu, Zn, Ni, Cr, Cd, Co and Pb) go into solution with an efficiency of more than 99% together with a quantity of iron and manganese, a residual sludge is obtained which is not a chemical waste within the meaning of the Chemical Waste Law, together with a solution (1) which contains the metals cited.

Since iron will interfere during the separate recovery of the metals from the solution, the iron is first removed from the solution (1) obtained at step a. For this purpose solution (1) is brought to a step b, at which the iron is removed selectively from solution (1). This can be achieved by means of liquid-liquid extraction in which an organo-phosphoric acid is used as extraction medium (I). For example a 20% solution of di-2-ethylhexylphosphoric acid (D2EHPA) in a suitable organic solvent is suitable.

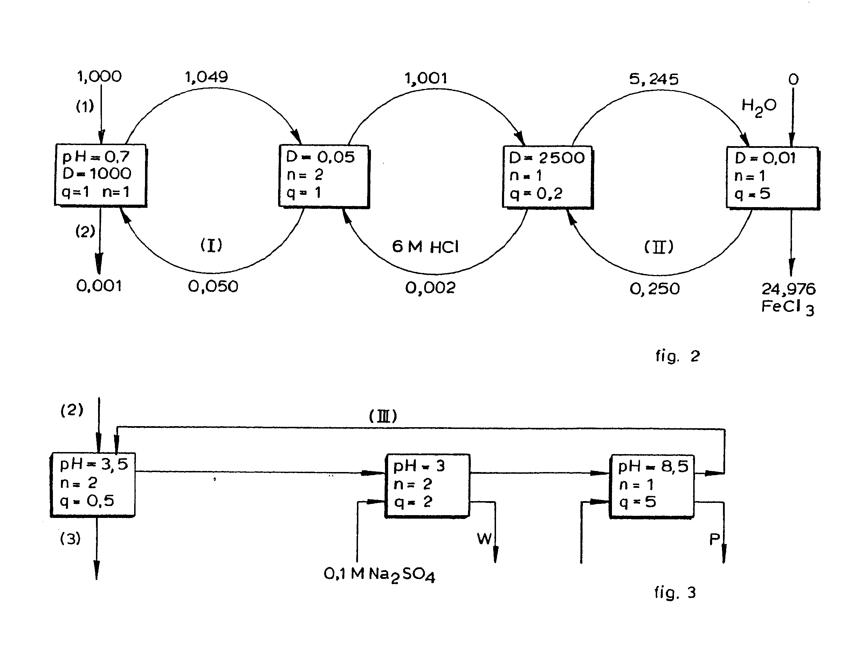

The stripping/regeneration of the organic extraction medium charged with iron and zinc by means of sulphuric acid, as described in DE 2503398, is not effective. For an effective regeneration of the charged extraction medium the following method is employed (see Fig. 2). The charged extraction medium is subjected to a subsequent liquid-liquid extraction step, in which the aqueous phase consists of a 6 M HCl solution. The iron thus goes over into the aqueous phase, from which it can be removed by a known technique, for instance by means of liquid-liquid extraction using a solvating extraction medium (II) such as methylisobutyl ketone (MIBK) or tributyl phosphate (TBP).

The iron-free hydrochloric solution is after recuperation re-used for the regeneration of the extraction medium (I).

The iron extraction is shown schematically in Fig. 2.

In addition, an embodiment is given, in which

n = number of equilibrium stages

q = organic/water phase ratio by volume

$$D = \text{partition coefficient} = \frac{\text{concentration of metal in organic phase}}{\text{concentration of metal in aqueous phase}}$$

The other numbers in Fig. 2 are iron concentrations (g/l) in the relevant flows in the embodiment. The extraction media in the example are:

Extraction medium I: 20% D2EHPA in kerosine
Extraction medium II: 10% TBP in kerosine.

By selecting favourable phase ratios the resultant iron chloride solution can be highly concentrated. (In the example by a factor 25 relative to the original solution).

Zinc is extracted only to the extent of 1% in the first step, and the other non-ferrous metals remain below that.

The solution (2) obtained at step b is, as shown in Fig. 1, brought to a process step c, in which the Cr (III) present is oxidised to Cr (VI) in an oxidation step c—2 using sodium hypochlorite, in which the pH should lie between 2 and 4. The chromium in its hexavalent form can be removed selectively from the solution. The removal of the chromium is necessary since it will interfere with the subsequent process steps.

The manganese which may be present (as $Mn^{2+}$) in solution (2) is deposited as manganese dioxide ($MnO_2$) as a result of the oxidising treatment in oxidation step c—2 and is then filtered off.

If lead is also present in solution (2) it is possible to prevent the insoluble lead chromate (2) from being deposited along with the manganese dioxide by treating the solution (2) at a step c—1 with sodium chromate, so that the lead chromate can be filtered off before the oxidisation treatment in step c—2 takes place.

The Cr (VI) formed is removed selectively from the solution in step c—3 using liquid-liquid extraction. For this purpose it is possible to use basic extraction media known *per se* such as primary, secondary and tertiary amines, and also quaternary ammonium salts. A mixture of trioctylamine and tributyl phosphate (TOA/TBP) is especially suitable for this purpose.

During the extraction of Cr (VI) at an equilibrium pH of between 2.5 and 4 small quantities of zinc and cadmium are co-extracted. At this point, see Fig. 3, by treating the charged extraction medium (III) in a subsequent extraction step with sodium sulphate solution at pH = 3, the co-extracted zinc and cadmium are selectively washed from extraction medium (III). The Cr (VI) is back-extracted from the charged extraction medium (III) using an aqueous solution at a pH between 6 and 9. By using this aqueous solution several times for this purpose a highly concentrated sodium chromate solution is obtained. The regenerated extraction medium (III) so obtained is re-used for the extraction of the Cr (VI) without further post-treatment. The Cr (VI) extraction is reproduced schematically in Fig. 3.

An embodiment is also given in which n and q have the same significance as in Fig. 2. In the embodiment the extraction medium (III) is TOA/TBP (50/100 g/l) in kerosine.

For the conditions indicated in Fig. 3, the following partition in the various flows applies:

|  | (2) | (3) | W | P |
|---|---|---|---|---|
| Relative volume | 1 | 1 | 0.25 | 0.10 |
| CR (VI) | 1.00 | 0.001 | — | 9.99 |
| Zn | 1.00 | 0.92 | 0.318 | 0.006 |
| Cd | 1.00 | 0.88 | 0.476 | 0.01 |

Zinc and cadmium are very strongly co-extracted, but can be washed out effectively using a sulphate solution.

By partially recycling the product flow P, it is possible to obtain a reducing concentration of the sodium chromate solution.

In a subsequent process step d, $Cu^{2+}$ is selectively removed from the solution (3) obtained at step c by means of liquid-liquid extraction at a pH between 4 and 5.5. The copper-charged extraction medium (IV) is stripped/regenerated using sulphuric acid to obtain a highly concentrated copper sulphate solution.

The solution (4) obtained in step d plus the wash water from step c—3 contains ions of zinc, cadmium, nickel and cobalt. These metal ions are extracted at step e from solution (4) using extraction medium (V) by carrying out the extraction in a number of equilibrium steps at a pH between 6 and 7. The aqueous solution (5) so obtained contains no more heavy metals and can be disposed of.

The extraction medium (V) obtained at step e and charged with $Sn^{2+}$, $Cd^{2+}$, $Ni^{2+}$ and $Co^{2+}$ is stripped/regenerated in step f at a pH of less than 5 using an aqueous solution containing 5 mol/l NaCl. In this, the above-mentioned metal ions go over into the aqueous solution (6).

By passing this solution (6) over a strongly basic anion exchanger the ions of zinc, cadmium and cobalt are fixed on the anion exchanger at step g, while $Ni^{2+}$ passes through unhindered. $Co^{2+}$, $Zn^{2+}$ and $Cd^{2+}$ are washed separately from the anion exchanger by successive elution with about 0.5 M HCl, about 0.02 M HCl and water.

Nickel is finally extracted from the salt solution (7) at step h at a pH of between 6 and 7 using extraction medium (VI). The nickel-charged extraction medium (VI) is stripped with sulphuric acid.

The resultant salt solution (8) can afterwards be brought back to strength and used again for stripping the extraction medium (V) charged in step e.

A mixture of cyclohexanoxime and an unsaturated fatty acid such as e.g. oleic acid in an arbitrary organic solvent is especially suitable for the extraction media (IV), (V) and (VI).

## Claims

1. Method for the separate recovery of metals such as chromium, zinc, cadmium, nickel from iron-containing waste, in particular chemical waste, in which the waste is treated with an acid whereby an aqueous solution (1) and a residue are obtained, characterised in that the iron (III) is extracted selectively from the solution (1) at a pH of 0—1 using an organophosphoric acid as extraction medium (I) and that other metals are also separately recovered.

2. Method in accordance with claim 1 characterised in that the chromium (III) in solution (2) is subjected to an oxidation treatment at a pH of 2—4 using an oxidising agent, such as sodium hypochlorite (NaClO), that the chromium (VI) formed is selectively extracted from the solution at a pH of 2.5—4 using a suitable extraction medium (III), and that the charged extraction medium (III) is freed of co-extracted cadmium and zinc by washing with a wash liquor, such as a sodium sulphate solution at a pH of about 3, before back-extraction of the chromium (VI).

3. A method for the separate recovery of metals such as chromium, zinc, cadmium and nickel from iron-containing waste, in particular chemical waste, characterised in the combination of the following steps:

a. treatment of the waste with an acid whereby an aqueous solution (1) and a residue are obtained;

b. selective extraction of iron (III) from solution (1) at a pH of 0—1 using an organo-phosphoric acid as an extraction medium (I);

c—2. oxidative treatment of the chromium (III) in solution (2) at a pH of 2—4 using an oxidising agent, such as sodium hypochlorite (NaClO), and

c—3. selective extraction of the chromium (VI) formed from the solution at a pH of 2.5—4 using a suitable extraction medium (III) and the removal of co-extracted cadmium and zinc from the charged extraction medium (III) by washing with a wash liquor such as a sodium sulphate solution at a pH of 3 before back-extraction of the chromium (VI).

4. Method according to one of the above claims, characterised by a subsequent step:

e. extraction of zinc, cadmium and nickel together from the solution (4) at a pH of 6—7 using a suitable extraction medium (V).

5. Method according to claim 4 characterised by the three following steps:

f. back-extraction of the extraction medium (V) charged in step e at a pH of less than 5 using an aqueous solution which contains about 5 mol/l NaCl;

g. fixing of zinc and cadmium from solution (6) on a strongly basic anion exchanger followed by subsequent elution of zinc and cadmium with about 0.02 M HCl and water respectively and

h. extraction from solution (7) of the nickel which has passed unhindered through the anion exchanger during fixing in step g, at a pH of 6—7 using a suitable extraction medium.

6. Method according to claims 4 and 5, wherein the waste also contains cobalt, characterised by extraction of cobalt at step e and fixing of cobalt on the anion exchanger followed by elution of cobalt with about 0.5 M HCl at step f.

7. Method according to claims 2 or 3, wherein the waste also contains manganese, characterised in that the manganese dioxide precipitate ($MnO_2$) formed during the oxidation treatment (step c—2) is filtered off.

8. Method according to one of the foregoing claims, wherein the waste also contains copper, characterised by a step:

d. selective extraction of copper from solution (3) at a pH of 4—5.5 using a suitable extraction medium (IV).

9. Method according to one of the preceding claims, wherein the waste also contains lead, characterised by a step carried out directly after step b: the selective extraction of iron:

c—1. treatment of solution (2), which is obtained from solution (1) after the iron extraction of step b, this latter solution being obtained by treatment of the waste with hydrochloric acid (HCl) or nitric acid ($HNO_3$), using a chromate e.g. sodium chromate ($Na_2CrO_4$) and filtration of the lead chromate ($PbCrO_4$) formed.

10. Method according to one of the preceding claims characterised in that the extraction medium (I) is di-2-ethylhexylphosphoric acid, this acid being dissolved in a suitable organic solvent.

11. Method according to one of the preceding claims, characterised in that the iron is back-extracted from the extraction medium (I) using a concentrated, e.g. 6 M, HCl solution.

## Patentansprüche

1. Verfahren für die getrennte Rückgewinnung von Metallen wie Chrom, Zink, Cadmium und Nickel aus eisenhaltigem Abfall, insbesondere chemischem Abfall, bei dem der Abfall mit einer Säure behandelt wird, wobei eine wässrige Lösung (1) und ein Rückstand erhalten wird, dadurch gekennzeichnet, daß das Eisen (III) selektiv aus der Lösung (1) bei einem PH-Wert von 0 bis 1 extrahiert wird, wobei eine organische phosphorhaltige Säure als Extraktionsmedium (I) verwendet wird und, daß andere Metalle auch getrennt rückgewonnen werden.

2. Verfahren gem. Anspruch 1, dadurch gekennzeichnet, daß Chrom (III) in Lösung (2) einer Oxidationsbehandlung bei einem PH-Wert von 2 bis 4 ausgesetzt wird, wobei ein Oxidationsmittel, wie beispielsweise Natriumhypochlorit (NaClO), verwendet wird, daß das gebildete Chrom (VI) selektiv aus der Lösung bei einem PH-Wert von 2,5 bis 4 extrahiert wird, wobei ein geeignetes Extraktionsmittel (III) verwendet wird, und daß das beladene Extraktionsmittel (III) von mitextrahiertem Cadmium und Zink durch Waschen mit einer Waschflüssigkeit, beispielsweise einer Natriumsulfatlösung bei einem PH-Wert von ca. 3 vor Rückextraktion des Chroms (VI), befreit wird.

3. Verfahren zur getrennten Rückgewinnung von Metallen, wie Chrom, Zink, Cadmium und Nickel aus eisenhaltigen Abfall, insbesondere chemischem Abfall, gekennzeichnet durch folgende Schritte:

a. Behandlung des Abfalls mit einer Säure, wobei eine wässrige Lösung (1) und ein Rückstand erhalten wird;

b. Selektive Extraktion des Eisens (III) aus der Lösung (1) bei einem PH-Wert von 0 bis 1, wobei eine organische phosphorhaltige Säure als Extraktionsmittel (I) verwendet wird;

c—2. Oxidationsbehandlung des Chroms (III) in Lösung (2) bei einem PH-Wert von 2 bis 4, wobei ein Oxidationsmittel, wie beispielsweise Natriumhypochlorit (NaClO), verwendet wird, und

d—3. Selektive Extraktion des gebildeten Chroms (VI) aus der Lösung bei einem PH-Wert von 2,5 bis 4, wobei ein geeignetes Extraktionsmittel (III) verwendet wird, und Entfernung des mitextrahiertem Cadmiums und Zinks aus dem beladenen Extraktionsmittel (III) durch Waschen mit einer Waschflüssigkeit wie beispielsweise einer Natriumsulfatlösung bei einem PH-Wert von 3 vor der Rückextraktion des Chroms (VI).

4. Verfahren gem. einem der vorangegangenen Ansprüche, gekennzeichnet durch folgenden Schritt:

e. Extraktion des Zinks, Cadmiums und Nickels zusammen aus der Lösung (IV) bei einem PH-Wert von 6 bis 7, wobei ein passendes Extraktionsmittel (V) verwendet wird.

5. Verfahren gem. Anspruch 4 gekennzeichnet durch folgende drei Schritte:

f. Rückextraktion des in Schritt e bei einem PH-Wert von weniger als 5 eingesetzten Extraktionsmittels (V), wobei eine wässrige Lösung verwendet wird, die ca. 5 mol/l NaCl enthält;

g. Fixierung des Zinks und Cadmiums aus der Lösung (6) auf einem stark basischem Anionenaustauscher gefolgt durch eine nachfolgende Spülung des Zinks und Cadmiums mit ca. 0,02 mol HCl und entsprechend Wasser und

h. Extraktion des Nickels aus der Lösung (7), welches den Anionenaustauscher während der Fixierung in Schritt g unbehindert passiert hat, bei einem PH-Wert von 6 bis 7, wobei ein geeignetes Extraktionsmittel verwendet wird.

6. Verfahren gem. den Ansprüchen 4 und 5, worin der Abfall auch Kobalt enthält, gekennzeichnet durch die Extraktion des Kobalts bei Schritt e und Fixierung des Kobalts auf dem Anionenaustauscher gefolgt von einer Spülung des Kobalts mit einer ca. 0,5 molaren HCl Lösung gem. Schritt f.

7. Verfahren gem. den Ansprüchen 2 oder 3, worin der Abfall auch Mangan enthält, dadurch gekennzeichnet, daß die Magnesiumdioxydausfällung ($MnO_2$), welche während der Oxidationsbehandlung (Schritt c—2.) gebildet worden ist, herausgefiltert wird.

8. Verfahren nach einem der vorangegangenen Ansprüche, worin der Abfall auch Kupfer beinhaltet, gekennzeichnet durch folgenden Schritt:

d. selektive Extraktion des Kupfers aus der Lösung (3) bei einem PH-Wert von 4 bis 5,5, wobei ein geeignetes Extraktionsmittel (IV) verwendet wird.

9. Verfahren nach einem der vorangegangenen Ansprüche, worin der Abfall auch Blei enthält, gekennzeichnet durch einen Schritt, welcher direkt nach dem Schritt b, nämlich der selektiven Extraktion des Eisens, ausgeführt wird;

c—1. Behandlung der Lösung (2), welche aus der Lösung (1) nach Extraktion des Eisens in Schritt b erhalten wurde, wobei die letztere Lösung durch Behandlung des Abfalls mit Salzsäure (HCl) oder Salpetersäure ($HNO_3$) erhalten wurde, unter Verwendung von Chromat beispielsweise Natriumchromat ($Na_2CrO_4$) und Filtern des gebildeten Bleichromats ($PbCrO_4$).

10. Verfahren gem. einem der vorangegangenen Ansprüche dadurch gekennzeichnet, daß das Extraktionsmittel (I) Di-2-Äthylphosphorsäure ist, und diese Säure in einem geeigneten organischen Lösungsmittel gelöst wird.

11. Verfahren nach einem der vorangegangenen Ansprüche dadurch gekennzeichnet, daß das Eisen aus dem Extraktionsmittel (I) rückextrahiert wird, wobei eine konzentrierte beispielsweise 6-molare HCl Lösung verwendet wird.

**Revendications**

1. Méthode de récupération séparée de métaux tels que le chrome, le zinc, le cadmium et le nickel à partir de déchets contenant du fer, en particulier des déchets chimiques, selon laquelle on traite les déchets avec un acide et on obtient une solution aqueuse (1) et un résidu, caractérisée en ce qu'on extrait sélectivement le fer (III) hors de la solution (1) à un pH de 0 à 1 en utilisant un acide organo-phosphorique comme milieu d'extraction (I) et en ce qu'on récupère également les autres métaux séparément.

2. Méthode selon la revendication 1, caractérisée en ce qu'on soumet le chrome (III) en solution (2) à un traitement d'oxydation à un pH de 2 à 4 en utilisant un agent oxydant, tel que l'hypochlorite de sodium (NaClO), en ce qu'on extrait sélectivement le chrome (VI) formé hors de la solution à un pH de 2,5 à 4 en utilisant un milieu d'extraction convenable (III) et en ce qu'on débarrasse le milieu d'extraction chargé (III) du cadmium et du zinc co-extraits en le lavant avec une liqueur de lavage telle qu'une solution de sulfate de sodium à un pH d'environ 3, avant une extraction en retour du chrome (VI).

3. Méthode de récupération séparée de métaux tels que le chrome, le zinc, le cadmium et le nickel à partir de déchets contenant du fer, en particulier les déchets chimiques, caractérisée par la combinaison des stades suivants:

a) traitement des déchets avec un acide de sorte qu'on obtient une solution aqueuse (I) et un résidu;

b) extraction sélective du fer (III) à partir de la solution (1) à un pH de 0 à 1, en utilisant un acide organo-phosphorique comme milieu d'extraction (I);

C—2) traitement oxydant un chrome (III) en solution (2) à un pH de 2 à 4, en utilisant un agent oxydant tel que l'hypochlorite de sodium (NaClO); et

C—3) extraction sélective hors de la solution du chrome (VI) formé à un pH de 2,5 à 4, en utilisant un milieu d'extraction convenable (III) et élimination hors du milieu d'extraction chargé (III) du cadmium et du zinc co-extraits par lavage avec une liqueur de lavage telle qu'une solution de sulfate de sodium à un pH de 3, avant extraction en retour du chrome (VI).

4. Méthode selon l'une quelconque des revendications précédentes, caractérisée par un stade ultérieur:

e) extraction conjointe du zinc, du cadmium et du nickel hors de la solution (4) à un pH de 6—7 en utilisant un milieu d'extraction convenable (V).

5. Méthode selon la revendication 4, caractérisée par les trois stades suivants:

f) extraction en retour du milieu d'extraction (5) chargé dans le stade e) à un pH inférieur à 5 en utilisant une solution aqueuse qui contient environ 5 moles/litres de NaCl;

g) fixation du zinc et du cadmium de la solution (6) sur un échangeur d'anions fortement basique, suivie par une élution du zinc et du cadmium avec du HCl environ 0,02 M et de l'eau, respectivement; et

h) extraction hors de la solution (7) du nickel qui est passé sans obstruction à travers l'échangeur d'anions pendant la fixation du stade g), à un pH de 6 à 7 en utilisant un milieu d'extraction convenable.

6. Méthode selon les revendications 4 et 5, dans laquelle les déchets contiennent également du cobalt, caractérisée par l'extraction du cobalt au stade e) et la fixation du cobalt sur l'échangeur d'anions suivie par l'élution du cobalt avec HCl, environ 0,5 M au stade f).

7. Méthode selon la revendication 2 ou 3, dans laquelle les déchets contiennent également du manganèse, caractérisée en ce que le précipité de bioxyde de manganèse (MnO$_2$) formé pendant le traitement d'oxydation (stade C—2) est séparé par filtration.

8. Méthode selon l'une quelconque des revendications précédentes, dans laquelle les déchets contiennent également du cuivre, caractérisée par un stade:

d) extraction sélective du cuivre hors de la solution (3), à un pH de 4 à 5,5 en utilisant un milieu d'extraction convenable (IV).

9. Méthode selon l'une quelconque des revendications précédentes, dans laquelle les déchets contiennent également du plomb, caractérisée par un stade qu'on effectue immédiatement après le stade b) d'extraction sélective du fer;

C—1) traitement de la solution (2) qu'on obtient à partir de la solution (1) après l'extraction du fer au stade b), cette dernière solution étant obtenue par traitement des déchets avec l'acide chlorhydrique (HCl) ou l'acide nitrique (HNO$_3$), en utilisant un chromate, par exemple le chromate de sodium (Na$_2$CrO$_4$) et la filtration du chromate de plomb formé (PbCrO$_4$).

10. Méthode selon l'une quelconque des revendications précédentes, caractérisée en ce que le milieu d'extraction (I) est l'acide di-2-éthylhexylphosphorique, cet acide étant dissous dans un solvant organique convenable.

11. Méthode selon l'une quelconque des revendications précédentes, caractérisée en ce que l'on extrait en retour le fer hors du milieu d'extraction (I) en utilisant une solution de HCl concentrée, par exemple 6 M.

fig. 1

1,000     1,049     1,001     5,245     0

(1)

$H_2O$

pH = 0,7
D = 1000
q=1   n=1

D = 0,05
n = 2
q = 1

D = 2500
n = 1
q = 0,2

D = 0,01
n = 1
q = 5

(2)

(I)     6 M HCl     (II)

0,001     0,050     0,002     0,250     24,976
$FeCl_3$

fig. 2

(2)     (III)

pH = 3,5
n = 2
q = 0,5

pH = 3
n = 2
q = 2

pH = 8,5
n = 1
q = 5

(3)

0,1 M $Na_2SO_4$     W     P

fig. 3